# EUROPEAN PATENT APPLICATION

(11) **EP 4 382 212 A1**
(43) Date of publication of application: **12.06.2024**
(21) Application number: 22852864.2
(22) Date of filing: 22.07.2022
(51) Int. Cl.: B05D 1/36, B05D 5/06, B05D 7/24, C09D 5/00, C09D 101/00, C09D 101/10, C09D 201/06, C09D 7/63

(54) **COATING COMPOSITION SET**

(30) Priority: 04.08.2021 JP 2021128103
(71) Applicant: Nippon Paint Automotive Coatings Co., Ltd., Hirakata-shi, Osaka 573-1153 (JP)
(72) Inventor: KIYONAGA, Hiroshi, Hirakata-shi, Osaka 573-1153 (JP); MARUO, Kenji, Hirakata-shi, Osaka 573-1153 (JP); SEGAWA, Daisuke, Hirakata-shi, Osaka 573-1153 (JP); YAMAGUCHI, Kohei, Hirakata-shi, Osaka 573-1153 (JP); ARAKI, Yoshito, Hirakata-shi, Osaka 573-1153 (JP)
(74) Representative: Mewburn Ellis LLP
(86) International application number: PCT/JP2022/028464
(87) International publication number: WO 2023/013440

(57) **Abstract**

Provided is a coating composition set capable of achieving both a metallic design and coating film performance. A coating composition set including: a colored coating composition (a), a luster coating composition (b), and a clear coating composition (c), wherein the colored coating composition (a) includes a hydroxy group-containing resin (a1), a first curing agent (a2), and a coloring pigment (a3); the hydroxy group-containing resin (a1) includes a first hydroxy group-containing resin (a11) having a number average molecular weight of 3000 or less and a second hydroxy group-containing resin (a12) having a number average molecular weight of 100000 or more; the luster coating composition (b) includes a scaly pigment (b1), a cellulose ester derivative (b2), a cellulose nanofiber (b3), a phosphoric acid group-containing compound (b4), and an aqueous solvent (b5); the luster coating composition (b) has a solid content of 0.1% by mass or more and 12% by mass or less; and the clear coating composition (c) is a two-pack type including a third hydroxy group-containing resin (c1) and a second curing agent (c2).

## Description

### TECHNICAL FIELD

The present invention relates to a coating composition set.

### BACKGROUND ART

In recent years, coating films capable of imparting metallic luster to the appearance of automobiles have been proposed. For example, Patent Literature 1 discloses a luster pigment dispersion capable of forming a dense metallic coating film.

### CITATIONS LIST

### PATENT LITERATURE

Patent Literature 1: WO 2017/175468 A

### SUMMARY OF INVENTION

### TECHNICAL PROBLEMS

However, even when the dispersion of Patent Literature 1 is used, a metallic design may not be obtained. Furthermore, an attempt to improve a metallic design has been found to be prone to deteriorate coating film performance (especially, water resistance). A challenge of the present invention is to provide a coating composition set capable of achieving both a metallic design and coating film performance.

### SOLUTIONS TO PROBLEMS

In order to solve the above-described problems, the present invention provides the following embodiments.
[1] A coating composition set including:
   a colored coating composition (a) to form a colored coating film (A);
   a luster coating composition (b) to be applied to the colored coating film (A) and form a luster coating film (B);and
   a clear coating composition (c) to be applied to the luster coating film (B) and form a clear coating film (C),
   wherein
   the colored coating composition (a) includes a hydroxy group-containing resin (a1), a first curing agent (a2), and a coloring pigment (a3),
   the hydroxy group-containing resin (a1) includes a first hydroxy group-containing resin (a11) having a number average molecular weight of 3000 or less and a second hydroxy group-containing resin (a12) having a number average molecular weight of 100000 or more,
   the luster coating composition (b) includes a scaly pigment (b1), a cellulose ester derivative (b2), a cellulose nanofiber (b3), a phosphoric acid group-containing compound (b4), and an aqueous solvent (b5),
   the luster coating composition (b) has a solid content of 0.1% by mass or more and 12% by mass or less, and
   the clear coating composition (c) is a two-pack type including a third hydroxy group-containing resin (c1) and a second curing agent (c2).
[2] The coating composition set according to [1], wherein a particle size of the second hydroxy group-containing resin (a12) in an aqueous solution having a pH of 8 is 150 nm or more.
[3] The coating composition set according to [1] or [2], wherein a content of the first hydroxy group-containing resin (a11) is 8% by mass or more and 60% by mass or less based on a total resin solid content of the colored coating composition (a).
[4] The coating composition set according to any one of [1] to [3], wherein the phosphoric acid group-containing compound (b4) includes at least one of an alkyl phosphate (b41) having an alkyl group having 4 to 30 carbon atoms and a phosphoric acid group-containing polymer (b42) having a phosphoric acid group value of 5 mg KOH/g or more and 300 mg KOH/g or less.
[5] The coating composition set according to any one of [1] to [4], wherein the cellulose ester derivative (b2) has an acid value of 20 mg KOH/g or more.
[6] The coating composition set according to any one of [1] to [5], wherein a content of the scaly pigment (b1) is 3% by mass or more and 50% by mass or less based on a total solid content of the luster coating composition (b).
[7] The coating composition set according to any one of [1] to [6], wherein a content of the phosphoric acid group-containing compound (b4) is 0.1% by mass or more and 15% by mass or less based on a total solid content of the luster coating composition (b).
[8] The coating composition set according to any one of [1] to [7], wherein the luster coating composition (b) further includes a surface conditioning agent (b6).
[9] The coating composition set according to any one of [1] to [8], wherein the colored coating composition (a) further includes a phosphoric acid group-containing compound (a4).
[10] The coating composition set according to any one of [1] to [9], wherein the luster coating composition (b) is to be applied to the colored coating film (A) that is uncured.
[11] The coating composition set according to any one of [1] to [10], wherein the clear coating composition (c) is to be applied to the luster coating film (B) that is uncured.

### ADVANTAGEOUS EFFECTS OF INVENTION

By the present invention, it is possible to provide a coating composition set capable of achieving both a metallic design and coating film performance.

### DESCRIPTION OF EMBODIMENTS

In order to obtain the metallic design, scaly pigments are arranged parallel to a surface of the luster coating film. For this reason, the solid content (particularly, resin component) of the coating composition (hereinafter, sometimes referred to as luster coating material) for forming the luster coating film is desirably as small as possible. However, when the amount of the resin component is small, the adhesion of the luster coating film to another coating film is prone to decrease, so that the coating film performance (for example, water resistance) is also prone to decrease.

In the present embodiment, it has been conceived that a luster coating material having a low solid content is used in order to enhance the arrangement property of the scaly pigment and a resin component is supplied from another coating film constituting a multilayer coating film to the luster coating film in order to enhance adhesion. Specifically, a hydroxy group-containing resin is supplied to the luster coating material from the colored coating composition (hereinafter sometimes simply referred to as colored coating material) that forms the colored coating film disposed on one main surface of the luster coating film. A curing agent is supplied to the luster coating material from the clear coating composition (hereinafter sometimes simply referred to as clear coating material) that forms the clear coating film disposed on the other main surface. The hydroxy group-containing resin supplied and the curing agent supplied react with each other in the luster coating material to form a coating film.

As the hydroxy group-containing resin to be supplied to the luster coating material, a hydroxy group-containing resin having a small molecular weight is blended in the colored coating material. The hydroxy group-containing resin having a small molecular weight can easily move from the colored coating material to the luster coating material. In addition, a hydroxy group-containing resin having a larger molecular weight is also blended in the colored coating material. The hydroxy group-containing resin having a large molecular weight controls the amount of movement of the resin component to the luster coating material. As a result, a decrease in adhesion of the colored coating film is inhibited, and the performance as a multilayer coating film is improved. The hydroxy group-containing resin having a large molecular weight further inhibits falling of the arranged scaly pigment toward the colored coating film side. As a result, the arrangement property of the scaly pigment is further improved, so that a superior metallic design can be easily obtained.

### [Coating composition set]

The coating composition set according to the present embodiment includes a colored coating composition (a) to form a colored coating film (A), a luster coating composition (b) to be applied to the colored coating film (A) to form a luster coating film (B), and a clear coating composition (c) to be applied to the luster coating film (B) to form a clear coating film (C). That is, the coating composition set according to the present embodiment is used for forming a multilayer coating film including a colored coating film (A), a luster coating film (B) formed on the colored coating film (A), and a clear coating film (C) formed on the luster coating film (B).

By applying the colored coating composition (a), the luster coating composition (b), and the clear coating composition (c) in this order, a resulting multilayer coating film exhibits a superior metallic design and high coating film performance. By applying the luster coating composition (b) to the uncured colored coating film (A), the metallic design and the coating film performance are further improved. By applying the clear coating composition (c) to the uncured luster coating film (B), the metallic design and the coating film performance are further improved. In one mode, the coating composition set according to the present embodiment is used for forming a multilayer coating film obtained by applying the luster coating composition (b) to the uncured colored coating film (A) formed of the colored coating composition (a), applying the clear coating composition (c) to the uncured luster coating film (B) formed of the luster coating composition (b), and then curing the uncured colored coating film (A), the uncured luster coating film (B), and the uncured clear coating film (C).

### (a) Colored coating material

The colored coating material (a) includes a hydroxy group-containing resin (a1), a first curing agent (a2), and a coloring pigment (a3). The colored coating material (a) includes a phosphoric acid group-containing compound (a4), various additives, and the like, as necessary. The colored coating material (a) is prepared by diluting a mixture of the hydroxy group-containing resin (a1), the first curing agent (a2) and the coloring pigment (a3), and further the phosphoric acid group-containing compound (a4) (hereinafter referred to as a first phosphoric acid group-containing compound (a4)), and various additives with a first solvent (a5). The colored coating material (a) may be either a one-pack coating material or a multi-pack coating material such as a two-pack coating material.

The viscosity of the colored coating material (a) is not particularly limited. The viscosity of the colored coating material (a) measured with a B-type viscometer at 20°C is, for example, 500 mPa·s/6 rpm or more and 6000 mPa s/6 rpm or less.

The solid content of the colored coating material (a) is not particularly limited. The solid content of the colored coating material (a) is preferably 30% by mass or more and 70% by mass or less. The solid component of the colored coating material (a) is all components of the colored coating material (a) excluding the first solvent from.

### (a1) Hydroxy group-containing resin

The hydroxy group-containing resin (a1) is a coating film-forming resin, and is crosslinked by the first curing agent (a2) to form a coating film.

The hydroxy group-containing resin (a1) includes at least two hydroxy group-containing resins differing in molecular weight. Specifically, the hydroxy group-containing resin (a1) includes a first hydroxy group-containing resin (a11) having a number average molecular weight of 3000 or less and a second hydroxy group-containing resin (a12) having a number average molecular weight of 100000 or more. Thereby, the adhesion of the luster coating film (B) can be improved while maintaining the performance of the colored coating film (A). Furthermore, the orientation property of the scaly pigment (b1) in the luster coating film (B) can be maintained. As a result, the performance and design of the multilayer coating film are improved.

The colored coating material (a) may include another coating film-forming resin (a13). Examples of the other coating film-forming resin (a13) include an acid group-containing resin, an epoxy resin having no hydroxy group, a urethane resin, a polyol resin, and a polycarbonate resin, each having a number average molecular weight of more than 3000 and less than 200000.

### (a11) First hydroxy group-containing resin

The first hydroxy group-containing resin (a11) has a number average molecular weight of 3000 or less. The first hydroxy group-containing resin (a11) having such a small molecular weight can migrate into the luster coating material (b) before being cured. When the first hydroxy group-containing resin (a11) reacts with the second curing agent (c2) having migrated from the clear coating material (c) into the luster coating material (b), the first hydroxy group-containing resin (a11) becomes a part of a constituent element of the luster coating film. As a result, the adhesion of the luster coating film (B) is improved. The number average molecular weight of the first hydroxy group-containing resin (a11) may be 2000 or less. At least part of the first hydroxy group-containing resin (a11) migrates into the luster coating material (b).

The number average molecular weight can be calculated based on the molecular weight of standard polystyrene from a chromatogram measured with a gel permeation chromatograph. As the gel permeation chromatograph, for example, HLC8120GPC (manufactured by Tosoh Corporation) is used. As a column, TSKgel G-4000HXL, TSKgel G-3000HXL, TSKgel G-2500HXL, and TSKgel G-2000HXL (all manufactured by Tosoh Corporation) are used. The chromatography is performed, for example, using tetrahydrofuran as a mobile phase and a differential refractive index detector (RI) as a detector under the conditions of a measurement temperature of 40°C and a flow rate of 1 cc/min.

From the viewpoint of improving the adhesion of the luster coating film, the content of the first hydroxy group-containing resin (a11) is preferably 8% by mass or more, and more preferably 10% by mass or more based on the total resin solid content of the colored coating material (a). From the viewpoint of design, the content of the first hydroxy group-containing resin (a11) is preferably 60% by mass or less, more preferably 50% by mass or less, and particularly preferably 40% by mass or less based on the total resin solid content of the colored coating material (a). In one embodiment, the content of the first hydroxy group-containing resin (a11) is 8% by mass or more and 60% by mass or less based on the total resin solid content of the colored coating material (a).

The total resin solid content of the colored coating material (a) is the total solid content of the first hydroxy group-containing resin (a11), the second hydroxy group-containing resin (a12), the first curing agent (a2), and other resin components.

The first hydroxy group-containing resin (a11) has one or more hydroxy groups. Examples of the first hydroxy group-containing resin (a11) specifically include a hydroxy group-containing acrylic resin, a hydroxy group-containing polyester resin, a hydroxy group-containing polyether resin, and a hydroxy group-containing polyurethane resin. Among them, a hydroxy group-containing acrylic resin and a hydroxy group-containing polyester resin are preferable. These are used singly or two or more of them are used in combination.

The hydroxyl value of the first hydroxy group-containing resin (a11) is not particularly limited. From the viewpoint of coating film performance (in particular, water resistance), the hydroxyl value of the first hydroxy group-containing resin (a11) is preferably 50 mg KOH/g or more, and more preferably 70 mg KOH/g or more. The hydroxyl value of the first hydroxy group-containing resin (a11) is preferably 200 mg KOH/g or less, and more preferably 180 mg KOH/g or less. In one embodiment, the hydroxyl value of the first hydroxy group-containing resin (a11) is 50 mg KOH/g or more and 200 mg KOH/g or less. The hydroxyl value is calculated according to JIS K 5601 2-1 Acid Value Measurement Method. Specifically, the hydroxyl value is the number of mg of potassium hydroxide (KOH) required to neutralize a free acid in 1 g of the solid component of the first hydroxy group-containing resin (a11). The same applies to the hydroxyl value of the second hydroxy group-containing resin (a12).

When water is used as the first solvent (a5), the first hydroxy group-containing resin (a11) is made water-soluble or water-dispersible by neutralizing hydroxy groups of the first hydroxy group-containing resin (a11) to form an alkali salt. Examples of the neutralizing agent include alkaline substances such as sodium hydroxide and amine compounds.

### (a12) Second hydroxy group-containing resin

The second hydroxy group-containing resin (a12) has a number average molecular weight of 100,000 or more. The second hydroxy group-containing resin (a12) having such a large molecular weight inhibits the scaly pigment from falling toward the colored coating film (A) side, for example, in the applying and/or curing step. As a result, the orientation property of the scaly pigment is improved. The number average molecular weight of the second hydroxy group-containing resin (a12) may be 200000 or more, and may be 300000 or more.

From the viewpoint of improving the design, the particle size of the second hydroxy group-containing resin (a12) in an aqueous solution having a pH of 8 is preferably 150 nm or more, and more preferably 200 nm or more. The particle size of the second hydroxy group-containing resin (a12) may be 700 nm or less, 600 nm or less, or 500 nm or less. In one embodiment, the particle size of the second hydroxy group-containing resin (a12) in an aqueous solution having a pH of 8 is 150 nm or more and 700 nm or less. The particle size of the second hydroxy group-containing resin (a12) is a 50% average particle size (D50) in a volume-based particle size distribution determined using a laser diffraction/scattering type particle size distribution analyzer.

From the viewpoint of improving the design, the content of the second hydroxy group-containing resin (a12) is preferably 8% by mass or more, and more preferably 10% by mass or more based on the total resin solid content of the colored coating material (a). From the viewpoint of appearance, the content of the second hydroxy group-containing resin (a12) is preferably 60% by mass or less, more preferably 45% by mass or less, and particularly preferably 30% by mass or less based on the total resin solid content of the colored coating material (a). In one embodiment, the content of the second hydroxy group-containing resin (a12) is 8% by mass or more and 60% by mass or less based on the total resin solid content of the colored coating material (a).

The second hydroxy group-containing resin (a12) has one or more hydroxy groups as with the first hydroxy group-containing resin (a11). Examples of the second hydroxy group-containing resin (a12) include the resins recited as examples of the first hydroxy group-containing resin (a11). Among them, a hydroxy group-containing acrylic resin and a hydroxy group-containing polyester resin are preferable, and a hydroxy group-containing acrylic resin is particularly preferable.

The hydroxyl value of the second hydroxy group-containing resin (a12) is not particularly limited. From the viewpoint of coating film performance, the hydroxyl value of the second hydroxy group-containing resin (a12) is preferably 20 mg KOH/g or more, and more preferably 30 mg KOH/g or more. The hydroxyl value of the second hydroxy group-containing resin (a12) is preferably 200 mg KOH/g or less, and more preferably 180 mg KOH/g or less. In one embodiment, the hydroxyl value of the second hydroxy group-containing resin (a12) is 20 mg KOH/g or more and 200 mg KOH/g or less.

The second hydroxy group-containing resin (a12) can be prepared in a state in which the second hydroxy group-containing resin (a12) dispersed in water by subjecting the starting material monomers of the second hydroxy group-containing resin (a12) to emulsion polymerization in the presence of a surfactant or a water-soluble resin. Alternatively, the second hydroxy group-containing resin (a12) may be dispersed in water with an emulsifier.

### (a2) First curing agent

The first curing agent (a2) is not particularly limited, and may be appropriately selected according to the hydroxy group-containing resin (a1). Examples of the first curing agent (a2) include an amino resin, a urea resin, a polyisocyanate compound, an epoxy group-containing compound, a carboxy group-containing compound, a carbodiimide group-containing compound, a hydrazide group-containing compound, and a semicarbazide group-containing compound. The polyisocyanate compound includes a blocked polyisocyanate compound in which an isocyanate group is blocked with a blocking agent. These are used singly or two or more of them are used in combination. Among them, an amino resin and a polyisocyanate compound are preferable from the viewpoint of various performance and cost of a resulting coating film.

Examples of the amino resin include water-soluble or water-insoluble melamine resins. The amino resin is obtained, for example, by condensing an amino compound such as melamine, benzoguanamine, or urea with formaldehyde, and further etherifying the condensate with a lower monohydric alcohol.

The polyisocyanate compound has at least two isocyanate groups in one molecule. Examples of the polyisocyanate compound include aliphatic polyisocyanates, alicyclic polyisocyanates, aliphatic polyisocyanates having an aromatic ring not bonded to an isocyanate group in the molecule (araliphatic polyisocyanates), aromatic polyisocyanates, and derivatives of these polyisocyanates. These are used singly or two or more of them are used in combination. Examples of the blocking agent include a phenol compound, a lactam compound, an alcohol, an ether, an oxime compound, a compound having an active methylene group, a mercaptan compound, an acid amide compound, an imide compound, an amine compound, an imidazole compound, a urea compound, a carbamic acid ester, an imine compound, a sulfite salt, an azole compound, and a ketone compound.

The amount of the first curing agent (a2) is not particularly limited. From the viewpoint of curability, the solid mass of the first curing agent (a2) is preferably 10% by mass or more, and more preferably 15% by mass or more based on the total solid mass of the hydroxy group-containing resin (a1) and the solid mass of the first curing agent (a2). The solid mass of the first curing agent (a2) is preferably 60% by mass or less, and more preferably 50% by mass or less based on the total solid mass of the hydroxy group-containing resin (a1) and the solid mass of the first curing agent (a2). In one embodiment, the solid mass of the first curing agent (a2) is 10% by mass or more and 60% by mass or less based on the total solid mass of the hydroxy group-containing resin (a1) and the solid mass of the first curing agent (a2).

### (a3) Coloring pigment

The coloring pigment (a3) is not particularly limited. Examples of the coloring pigment (a3) include organic coloring pigments such as azo chelate pigments, insoluble azo pigments, condensed azo pigments, diketopyrrolopyrrole-based pigments, benzimidazolone-based pigments, phthalocyanine-based pigments, indigo pigments, perinone-based pigments, perylene-based pigments, dioxane-based pigments, quinacridone-based pigments, isoindolinone-based pigments, and metal complex pigments; and inorganic coloring pigments such as chrome yellow, yellow iron oxide, red iron oxide, carbon black, and titanium dioxide. These are used singly or two or more of them are used in combination.

The colored coating material (a) may further include an extender pigment. Examples of the extender pigment include calcium carbonate, barium sulfate, clay, and talc. These are used singly or two or more of them are used in combination.

The contents of the coloring pigment (a3) and the extender pigment are not particularly limited. The mass ratio (PWC) of all the pigments to the resin solid mass is appropriately adjusted in the range of 0.1% by mass or more and 70% by mass or less. The lower limit of the PWC is preferably 0.5% by mass, and more preferably 1.0% by mass. The upper limit of the PWC is preferably 65% by mass, and more preferably 60% by mass.

### (a4) First phosphoric acid group-containing compound

The colored coating material (a) preferably further includes a first phosphoric acid group-containing compound (a4). In this case, the curing reaction between the hydroxy group-containing resin (a1) (mainly, the second hydroxy group-containing resin (a12)) and the first curing agent (a2) is accelerated, so that the adhesion of the colored coating film (A) is easily improved.

The content of the first phosphoric acid group-containing compound (a4) is not particularly limited. From the viewpoint of improving adhesion, the content of the first phosphoric acid group-containing compound (a4) is preferably 0.1% by mass or more, and more preferably 1% by mass or more based on the total solid content of the colored coating material (a). The content of the first phosphoric acid group-containing compound (a4) is preferably 15% by mass or less, and more preferably 5% by mass or less based on the total solid content of the colored coating material (a). In one embodiment, the content of the first phosphoric acid group-containing compound (a4) is 0.1% by mass or more and 15% by mass or less based on the total solid content of the colored coating material (a).

The first phosphoric acid group-containing compound (a4) is not particularly limited as long as it has a phosphoric acid group (-P(=O)(OR)₂ (R is independently at each occurrence hydrogen or a hydrocarbon group). From the viewpoint of improving adhesion, the first phosphoric acid group-containing compound (a4) preferably includes at least one of an alkyl phosphate (a41) having an alkyl group having 4 to 30 carbon atoms and a phosphoric acid group-containing polymer (a42) having a phosphoric acid group value of 5 mg KOH/g or more and 300 mg KOH/g or less.

### (a41) Alkyl phosphate

The alkyl phosphate (a41) has an alkyl group having 4 to 30 carbon atoms. Examples of the alkyl phosphate (a41) include monoalkyl phosphates, dialkyl phosphates, and mixtures thereof. In the dialkyl phosphate, the two alkyl groups may be the same or different. The dialkyl phosphate preferably has the same two alkyl groups.

Examples of the alkyl group having 4 to 30 carbon atoms include a butyl group, a pentyl group, a hexyl group, a heptyl group, an octyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, an eicosyl group, a docosyl group, a tetracosyl group, a hexacosyl group, and an octacosyl group. The alkyl group may be linear or branched.

Examples of the alkyl phosphate (a41) include butyl acid phosphate (mixture of monobutyl phosphate and dibutyl phosphate), 2-ethylhexyl acid phosphate (mixture of mono-2-ethylhexyl phosphate and di-2-ethylhexyl phosphate), isodecyl acid phosphate (mixture of monoisodecyl phosphate and diisodecyl phosphate), dilauryl acid phosphate, lauryl acid phosphate (mixture of monolauryl phosphate and dilauryl phosphate), tridecyl acid phosphate (mixture of monotridecyl phosphate and ditridecyl phosphate), monostearyl acid phosphate, distearyl acid phosphate, stearyl acid phosphate (mixture of monostearyl phosphate and distearyl phosphate), isostearyl acid phosphate (mixture of monoisostearyl phosphate and diisostearyl phosphate), oleyl acid phosphate (mixture of monooleyl phosphate and dioleyl phosphate), and behenyl acid phosphate (mixture of monobehenyl phosphate and dibehenyl phosphate).

### (a42) Phosphoric acid group-containing polymer

The phosphoric acid group-containing polymer (a42) has a phosphoric acid group value of 5 mg KOH/g or more and 300 mg KOH/g or less. When the phosphoric acid group value is within this range, the water resistance is likely to be improved together with the adhesion. The phosphoric acid group value of the phosphoric acid group-containing polymer (a42) is preferably 10 mg KOH/g or more, and more preferably 50 mg KOH/g or more. The phosphoric acid group value of the phosphoric acid group-containing polymer (a42) is preferably 250 mg KOH/g or less. In one embodiment, the phosphoric acid group-containing polymer (a42) has a phosphoric acid group value of 50 mg KOH/g or more and 300 mg KOH/g or less.

The phosphoric acid group value is calculated on the basis of JIS K 5601 2-1 Acid value measurement method. Specifically, the phosphoric acid group value is the number of mg of potassium hydroxide (KOH) required to neutralize a free acid in 1 g of the solid component of the phosphoric acid group-containing polymer (a42).

The number average molecular weight of the phosphoric acid group-containing polymer (a42) is, for example, 1000 or more and 50000 or less. The number average molecular weight of the phosphoric acid group-containing polymer (a42) is preferably 2000 or more, and more preferably 3000 or more. The number average molecular weight of the phosphoric acid group-containing polymer (a42) is preferably 30000 or less, and more preferably 20000 or less.

Examples of the phosphoric acid group-containing polymer (a42) include an acrylic resin, a polyester resin, a polyether resin, and an epoxy resin each having a phosphoric acid group value of 5 mg KOH/g or more and 300 mg KOH/g or less. These are used singly or two or more of them are used in combination. Among them, a phosphoric acid group-containing acrylic resin is preferable from the viewpoint of water resistance. The phosphoric acid group-containing acrylic resin is obtained, for example, by polymerizing a phosphoric acid group-containing α,β-ethylenically unsaturated monomer or copolymerizing this monomer with another α,β-ethylenically unsaturated monomer free from a phosphoric acid group.

### (a5) First solvent

The first solvent is not particularly limited. The first solvent may be water (deionized water), an organic solvent, or a combination thereof. Among them, water is preferable from the viewpoint of low VOC (Volatile Organic Compounds). The proportion of water in the first solvent is preferably 50% by mass or more, and preferably 80% by mass or more.

Examples of the organic solvent include ester-based solvents such as ethyl acetate, butyl acetate, isopropyl acetate, ethylene glycol monoethyl ether acetate, propylene glycol monomethyl ether acetate, and propylene glycol monoethyl ether acetate; ether-based solvents such as propylene glycol monomethyl ether, ethylene glycol monomethyl ether, ethoxypropanol, ethylene glycol isopropyl ether, ethylene glycol-t-butyl ether, ethylene glycol monoethyl ether, ethylene glycol monobutyl ether (butyl cellosolve), and propylene glycol monobutyl ether; alcohol-based solvents such as methanol, ethanol, ethoxypropanol, butanol, methoxybutanol, methylmethoxybutanol, propyl alcohol, and 2-ethylhexanol; ketone-based solvents such as acetone, methyl ethyl ketone, and methyl isobutyl ketone; aliphatic hydrocarbon-based solvents such as Swasol, ShellSol, and Mineral Spirit; and aromatic solvents such as xylene, toluene, SOLVESSO-100 (S-100), and SOLVESSO-150 (S-150). These are used singly or two or more of them are used in combination.

The amount of the first solvent (a5) is not particularly limited, and is appropriately set according to the solid content, viscosity, and the like of the colored coating material (a). The first solvent is added such that, for example, the solid content of the colored coating material (a) is 30% by mass or more and 70% by mass or less and the viscosity of the colored coating material (a) measured with a B-type viscometer at 20°C is 500 mPa·s/6 rpm or more and 6000 mPa s/6 rpm or less.

### (Others)

The colored coating material (a) may further include various additives, as necessary. Examples of the additive include an ultraviolet absorber, an antioxidant, an antifoaming agent, a surface conditioning agent, a dispersant, and a pinhole inhibitor.

### (b) Luster coating material

The luster coating material (b) includes a scaly pigment (b1), a cellulose ester derivative (b2), a cellulose nanofiber (b3), a phosphoric acid group-containing compound (b4), and an aqueous solvent (b5). The luster coating material (b) includes a surface conditioning agent (b6), various additives, and the like, as necessary. The luster coating material (b) is prepared by diluting a mixture of the scaly pigment (b1), the cellulose ester derivative (b2), the cellulose nanofiber (b3), the phosphoric acid group-containing compound (b4) (hereinafter, this compound is referred to as a second phosphoric acid group-containing compound), the surface conditioning agent (b6), various additives, and the like, with the aqueous solvent (b5).

The solid content of the luster coating material (b) is 0.1% by mass or more and 12% by mass or less. As a result, the scaly pigment is easily arranged at a high density along the article to be coated. The solid content of the luster coating material (b) is preferably 0.5% by mass or more, more preferably 1% by mass or more, and particularly preferably 1.5% by mass or more. The solid content of the luster coating material (b) is preferably 10% by mass or less, more preferably 8% by mass or less, and particularly preferably 5% by mass or less. The solid component of the luster coating material (b) refers to all components of the luster coating material (b) excluding the aqueous solvent (b5).

The viscosity of the luster coating material (b) is not particularly limited. The viscosity of the luster coating material (b) is preferably 20 mPa s/6 rpm or more and 2000 mPa·s/6 rpm or less as measured with a B-type viscometer at 20°C from the viewpoint that disturbance of the arrangement of the scaly pigment (b 1) is easily inhibited.

### (b1) Scaly pigment

The scaly pigment is not particularly limited as long as it reflects light. The scaly pigment preferably has an aspect ratio of 2 or more from the viewpoint that the metallic texture is easily improved. The aspect ratio is a ratio of a major axis of one principal plane of the scaly pigment to a distance (thickness) between two principal planes of the scaly pigment: major axis/thickness. The aspect ratio of the scaly pigment may be 10 or more and 1000 or less.

The major axis of the scaly pigment (b1) is not particularly limited. The major axis of the scaly pigment (b1) may be, for example, 1 µm or more, or may be 3 µm or more. The major axis may be 80 µm or less, or may be 50 µm or less. In one embodiment, the major axis of the scaly pigment (b1) is 1 µm or more and 80 µm or less. The major axis is calculated by observing a multilayer coating film from the normal direction thereof with an electron microscope. In the observation field of view, a region corresponding to the scaly pigment (b1) and other regions are binarized by image processing software. Next, 20 scaly pigments (b1) are arbitrarily selected, and their longest diameters are each measured. The average value of these measured values is the major axis of the scaly pigment (b 1).

The thickness of the scaly pigment (b1) is not particularly limited. The thickness of the scaly pigment (b1) may be, for example, 0.02 µm or more. The thickness of the scaly pigment (b1) may be 1 µm or less, and may be 0.5 µm or less. In one embodiment, the scaly pigment (b1) has a thickness of 0.02 µm or more and 1 µm or less. The thickness may be calculated by observing the cross section of the luster coating film (B) with an electron microscope. In the observation field of view, a region corresponding to the scaly pigment (b1) and other regions are binarized by image processing software. Next, 20 scaly pigments (b1) are arbitrarily selected, and the lengths of their thickest parts are each measured. The average value of these measured values is the thickness of the scaly pigment (b1).

The average particle size of the scaly pigment (b1) is not particularly limited. From the viewpoint that the metallic texture is easily improved, the average particle size of the scaly pigment (b1) may be 2 µm or more, or may be 5 µm or more. The average particle size may be 50 µm or less, or may be 35 µm or less. In one embodiment, the average particle size of the scaly pigment (b1) is 2 µm or more and 50 µm or less. The average particle size means a volume average particle size D50. The volume average particle size D50 can be measured using a laser Doppler type particle size analyzer (for example, "MICROTRAC UPA 150" manufactured by Nikkiso Co., Ltd.).

The content of the scaly pigment (b1) may be 3% by mass or more, 5% by mass or more, or 7% by mass or more based on the total solid content of the luster coating material from the viewpoint of design. The content of the scaly pigment (b1) is, for example, 50% by mass or less, may be 30% by mass or less, or may be 20% by mass or less based on the total solid content of the luster coating material. In one embodiment, the content of the scaly pigment (b1) is 3% by mass or more and 50% by mass or less based on the total solid content of the luster coating material. In particular, when the content of the cellulose nanofibers is 0.03% by mass or more and 1% by mass or less of the luster coating material and the content of the scaly pigment is 3% by mass or more and 50% by mass or less of the total solid content of the luster coating material, the design can be further improved.

The scaly pigment (b1) is not particularly limited. Examples of the scaly pigment (b1) include metal particles, metal-coated mica, metal-coated glass particles, and graphite. Examples of the metal particles specifically include particles of aluminum, copper, zinc, iron, iron phosphide, nickel, tin, aluminum oxide, and alloys containing these. These are used singly or two or more of them are used in combination. The scaly pigment (b1) may be colored. Among them, aluminum particles are preferable from the viewpoint that the metallic texture is easily improved.

### (b2) Cellulose ester derivative

The cellulose ester derivative further improves the arrangement property of the scaly pigment.

The cellulose ester derivative is a condensation reaction product of an oxo acid (typically, a carboxylic acid) and cellulose ((C₆H₁₀O₅)ₙ). In the cellulose ester derivative, since the hydroxy group of cellulose is esterified, the balance between hydrophilicity and hydrophobicity is controlled. Furthermore, the cellulose ester derivative has an aspect ratio smaller than that of cellulose nanofibers (CNF), for example, less than 10. Thus, the cellulose ester derivative exhibits a behavior different from that of CNF in the luster coating material or the luster coating film.

The oxo acid (a group that forms an ester linkage with a hydroxy group of cellulose) preferably has a hydrocarbon group having 1 to 20 carbon atoms. A general structure of the cellulose ester derivative is shown in the following formula.

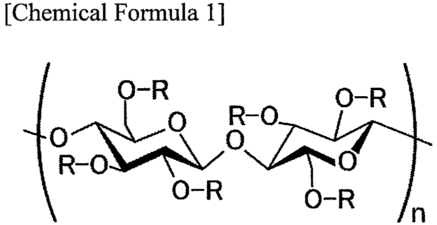

In the formula, R is independently at each occurrence hydrogen (H), an acyl group (-C(= O)-R¹), a hydrocarbon group (-R¹), or a carboxyalkyl group (-R²COOH), and at least one R represents an acyl group. A plurality of R's may be the same or different, and a plurality of R²s may be the same or different.

R¹ is, for example, a hydrocarbon group having 1 to 20 carbon atoms. The hydrocarbon group may be a chain, branched, or cyclic aliphatic hydrocarbon group, and may have an aromatic ring. In particular, R¹ is preferably a chain or branched aliphatic hydrocarbon group having 2 to 10 carbon atoms, more preferably 2 to 4 carbon atoms.

R² is, for example, an alkylene group having 1 to 20 carbon atoms. The alkylene group may be chain, branched, or cyclic. In particular, R² is preferably a chain or branched alkylene group having 2 to 10 carbon atoms, and more preferably 2 to 4 carbon atoms.

The acid value of the cellulose ester derivative is preferably 20 mg KOH/g or more. Owing to this, the cellulose ester derivative can stably exist in the aqueous coating material, and the effect thereof is easily exhibited. The acid value of the cellulose ester derivative is more preferably 40 mg KOH/g or more. The acid value of the cellulose ester derivative may be 150 mg KOH/g or less. In one embodiment, the acid value of the cellulose ester derivative is 20 mg KOH/g or more and 150 mg KOH/g or less.

Examples of the cellulose ester derivative specifically include cellulose acetate, cellulose triacetate, cellulose acetate phthalate, cellulose acetate butyrate, cellulose butyrate, cellulose tributyrate, cellulose propionate, cellulose tripropionate, cellulose acetate propionate, carboxymethyl cellulose acetate, carboxymethyl cellulose acetate propionate, carboxymethyl cellulose acetate butyrate, cellulose acetate butyrate succinate, and cellulose propionate butyrate. These are used singly or two or more of them are used in combination. Among them, carboxymethylcellulose acetate butyrate is preferable.

The content of the cellulose ester derivative is preferably set according to the content of the CNF. The ratio of the content C_{N} of the cellulose nanofiber to the content C_{E} of the cellulose ester derivative, C_{N}/C_{E}, is preferably 0.03 or more. Owing to this, the effects of the CNF, namely, an increase in viscosity and prevention of the scaly pigment from settling are more easily exhibited. The ratio C_{N}/C_{E} is more preferably 3.0 or less. Owing to this, the effect of the cellulose ester derivative, namely, inhibition of the occurrence of coating film defects is more easily exhibited. The ratio C_{N}/C_{E} is more preferably 0.06 or more, and particularly preferably 0.1 or more. The ratio C_{N}/C_{E} is more preferably 2.0 or less, and particularly preferably 1.5 or less. In one embodiment, the ratio C_{N}/C_{E} is 0.03 or more and 3.0 or less. The content is calculated on the basis of the solid content.

### (b3) Cellulose nanofiber

Cellulose nanofiber (CNF) is dispersed in the form of a network in the luster coating material to increase the viscosity of the coating material. CNF further inhibits the scaly pigment from settling.

CNF is obtained by mechanically fibrillating a plant material as defined in ISO TS 20477. CNF is a cellulose microfibril (single nanofiber) composed of a crystalline part, a paracrystalline part, and an amorphous part, or longitudinally torn cellulose microfibrils, entangled cellulose microfibrils, or an aggregate thereof having a network structure. CNF also includes those referred to as cellulose nanofibril, fibrillated cellulose, nanocellulose crystal, and the like. Examples of the plant material mainly include wood. Examples of other plant materials include bamboo, rice straw, wheat straw, rice hulls, herbaceous plants (e.g., Japanese silver grass), and seaweed. As described later, the CNF has an aspect ratio of, for example, 10 or more and is fibrous.

Prior to mechanical fibrillation, the plant material is usually subjected to chemical treatment. The shape of the plant material is not changed by the chemical treatment and remains fibrous. Through the chemical treatment, an anionic group, such as a carboxy group, a phosphoric acid group, a phosphorous acid group, a carboxymethyl group, or a sulfo group, is introduced into the resulting CNF. Examples of the chemical treatment include a TEMPO oxidation method in which a carboxy group is introduced by oxidation using 2,2,6,6-tetramethylpiperidine-1-oxyl (TEMPO), a phosphoric acid esterification method in which a phosphoric acid group is introduced, a phosphorous acid esterification method in which a phosphorous acid group is introduced, a carboxymethylation method in which a carboxymethyl group is introduced, and a sulfonation method in which a sulfo group is introduced. Depending on the type of the chemical treatment, the characteristics of the resulting CNF may vary. In the present embodiment, a CNF subjected to any chemical treatment can be used.

Among them, a CNF treated by the TEMPO oxidation method (hereinafter referred to as a TEMPO-oxidized type CNF) is preferable from the viewpoint of superior transparency. In particular, a CNF that has been subjected to acid treatment and then treated by the TEMPO oxidation method is preferred. The acid treatment is performed, for example, under conditions of a pH of 2 to 6 and a temperature of 30°C or more and 120°C or less. The acid may be either an inorganic acid or an organic acid.

The amount of the carboxy group based on the bone dry mass of the TEMPO-oxidized type CNF is preferably 0.5 mmol/g or more, more preferably 1.0 mmol/g or more, and particularly preferably 1.3 mmol/g or more. The amount of the carboxy group is preferably 2.5 mmol/g or less, more preferably 2.0 mmol/g or less, and particularly preferably 1.6 mmol/g or less. In one embodiment, the amount of the carboxy group based on the bone dry mass of the TEMPO-oxidized type CNF is 0.5 mmol/g or more and 2.5 mmol/g or less.

The amount of the carboxy group is calculated, for example, by the following method. A 0.1 M aqueous hydrochloric acid solution is added to 60 mL of a 0.5% by mass slurry of a TEMPO-oxidized type CNF to adjust the pH to 2.5. Subsequently, a 0.05 N aqueous sodium hydroxide solution is added dropwise to the slurry, and the electrical conductivity until the pH reaches 11 is measured. The amount (a) of sodium hydroxide consumed in the neutralization stage of a weak acid with a slow change in electrical conductivity is identified. The amount of carboxy groups is calculated from the amount (a) of sodium hydroxide and the following formula. Amount of carboxyl groups [mmol/g TEMPO-oxidized type CNF] = a [mL] × 0.05/mass [g] of TEMPO-oxidized type CNF

From the viewpoint of reducing the scaly pigment from settling, the average fiber width of the CNF is preferably 1 nm or more, more preferably 2 nm or more, and particularly preferably 3 nm or more. From the viewpoint of transparency, the average fiber width of the CNF is preferably 300 nm or less, more preferably 200 nm or less, still more preferably 100 nm or less, and particularly preferably 90 nm or less. In one embodiment, the average fiber width of the CNF is 1 nm or more and 300 nm or less.

From the viewpoint of reducing the scaly pigment from settling, the average fiber length of the CNF is preferably 0.1 µm or more, more preferably 0.5 µm or more, still more preferably 1 µm or more, and particularly preferably 2 µm or more. From the viewpoint of transparency, the average fiber length of the CNF is preferably 200 µm or less, more preferably 100 µm or less, and particularly preferably 90 µm or less. In one embodiment, the average fiber length of the CNF is 0.1 µm or more and 200 µm or less.

The aspect ratio of the CNF may be, for example, 10 or more, 20 or more, 25 or more, or 100 or more. The aspect ratio of the CNF may be, for example, 2000 or less, 1000 or less, or 500 or less. In one embodiment, the aspect ratio of the CNF is 10 or more and 2000 or less.

The average fiber width and the average fiber length can be calculated by measuring fiber diameters and fiber lengths of a sufficient number of fibers using an atomic force microscope (AFM) or a transmission electron microscope (TEM), and averaging the fiber diameters and the fiber lengths. The aspect ratio is a value obtained by dividing the average fiber length by the average fiber width (average fiber length/average fiber width).

The content C_{N} of the CNF is preferably 0.03% by mass or more of the luster coating material. Owing to this, the above-described effect of the CNF is more easily exhibited. The content C_{N} is preferably 1.0% by mass or less of the luster coating material. Owing to this, the occurrence of coating film defects is easily inhibited. The content C_{N} is more preferably 0.06% by mass or more, and particularly preferably 0.1% by mass or more of the luster coating material. The content C_{N} is more preferably 0.6% by mass or less, particularly preferably 0.3% by mass or less of the luster coating material. In one embodiment, the content C_{N} is 0.03% by mass or more and 1.0% by mass or less of the luster coating material.

### (b4) Second phosphoric acid group-containing compound

The luster coating material (b) includes a second phosphoric acid group-containing compound (b4). As a result, the dispersibility of the scaly pigment (b1) is improved, and the arrangement property is further improved. In addition, the curing reaction between the first hydroxy group-containing resin (a11) and the second curing agent (c2) in the luster coating film (B) is accelerated, so that the adhesion of the luster coating film (B) is more easily improved.

The content of the second phosphoric acid group-containing compound (b4) is not particularly limited. From the viewpoint of improving design and adhesion, the content of the second phosphoric acid group-containing compound (b4) is preferably 0.1% by mass or more, and more preferably 1% by mass or more based on the total solid content of the luster coating material (b). The content of the second phosphoric acid group-containing compound (b4) is preferably 15% by mass or less, and more preferably 10% by mass or less based on the total solid content of the luster coating material (b). In one embodiment, the content of the second phosphoric acid group-containing compound (b4) is 0.1% by mass or more and 15% by mass or less of the total solid content of the luster coating material (b).

The second phosphoric acid group-containing compound (b4) is not particularly limited as long as it has a phosphoric acid group (-P(=O)(OR)₂ (R is independently at each occurrence hydrogen or a hydrocarbon group). From the viewpoint of improving the arrangement property and the adhesion, the second phosphoric acid group-containing compound (b4) preferably includes at least one of an alkyl phosphate (b41) having an alkyl group having 4 to 30 carbon atoms and a phosphoric acid group-containing polymer (b42) having a phosphoric acid group value of 5 mg KOH/g or more and 300 mg KOH/g or less.

Examples of the alkyl phosphate (b41) and the phosphoric acid group-containing polymer (b42) include the same compounds as those recited as examples for the alkyl phosphate (b41). The first phosphoric acid group-containing compound (a4) and the second phosphoric acid group-containing compound (b4) may be the same or different.

The phosphoric acid group value of the phosphoric acid group-containing polymer (b42) is preferably 10 mg KOH/g or more, and more preferably 50 mg KOH/g or more. When the phosphoric acid group value is within this range, the water resistance is likely to be improved together with the adhesion. The phosphoric acid group value of the phosphoric acid group-containing polymer (b42) is preferably 250 mg KOH/g or less. In one embodiment, the phosphoric acid group-containing polymer (b42) has a phosphoric acid group value of 50 mg KOH/g or more and 300 mg KOH/g or less.

### (b5) Aqueous solvent

Examples of the aqueous solvent include various kinds of water such as pure water, ion-exchanged water, distilled water, tap water, and industrial water. The luster coating material (b) may include an organic solvent together with the aqueous solvent. The amount of the aqueous solvent (b5) is not particularly limited, and is set such that the solid content of the luster coating material (b) is 0.1% by mass or more and 10% by mass or less.

### (b6) Surface conditioning agent

The luster coating material (b) preferably includes a surface conditioning agent (b6). Owing to this, the surface tension of the luster coating material (b) is controlled, and the scaly pigment (b1) is more easily arranged parallel to the surface of the luster coating film (B). In addition, wettability of the luster coating material (b) to an uncured colored coating film (A) is easily improved, and adhesion between layers is improved.

The surface conditioning agent (b6) is not particularly limited. Examples of the surface conditioning agent (b6) include silicone-based, acryl-based, vinyl-based, and fluorine-based surface conditioning agents. These are used singly or two or more of them are used in combination. Among them, a silicone-based surface conditioning agent is preferable from the viewpoint of designability, water resistance, and the like. Examples of the silicone-based surface conditioning agent include polydimethylsiloxane and modified silicone prepared by modifying polydimethylsiloxane. Examples of the modified silicone include a polyether-modified product, an acryl-modified product, and a polyester-modified product.

Examples of the commercially available surface conditioning agent include BYK series (manufactured by BYK Japan KK), TEGO series (manufactured by Evonik Industries AG), GLANOL series and POLYFLOW series (both manufactured by Kyoeisha Chemical Co., Ltd.), and DISPARLON series (manufactured by Kusumoto Chemicals, Ltd.).

The amount of the surface conditioning agent (b6) is not particularly limited. The amount of the surface conditioning agent (b6) is preferably 0.1% by mass or more, more preferably 0.2% by mass or more, and particularly preferably 0.4% by mass or more of the luster coating material (b). The amount of the surface conditioning agent (b6) is preferably 10% by mass or less, more preferably 8% by mass or less, and particularly preferably 6% by mass or less of the luster coating material (b). In one embodiment, the amount of the surface conditioning agent (b6) is 0.1% by mass or more and 10% by mass or less of the luster coating material (b).

### (Others)

The luster coating material (b) may further include various additives, as necessary. Examples of the additive include a surfactant, an ultraviolet absorber, an antioxidant, an antifoaming agent, a dispersant, a pinhole inhibitor, a viscosity modifier other than the cellulose ester derivative (b2) and the cellulose nanofiber (b3), and a pigment other than the scaly pigment (b1).

Examples of the viscosity modifier include a silica-based fine powder, a mineral-based viscosity modifier, a barium sulfate atomized powder, a polyamide-based viscosity modifier, an organic resin fine particle viscosity modifier, a diurea-based viscosity modifier, a urethane associative viscosity modifier, a polyacrylic acid-based viscosity modifier, and cellulose ether. These are used singly or two or more of them are used in combination. Examples of the cellulose ether include carboxymethyl cellulose, methyl cellulose, hydroxyethyl cellulose, hydroxyethyl methyl cellulose, and hydroxypropyl methyl cellulose.

The luster coating material (b) may comprise other pigments other than the scaly pigment (b1) depending on the hiding property and the like. Examples of such other pigments include rust-proof pigments, coloring pigments, and the extender pigments described above. Note that the content of the other pigment is preferably 10% by mass or less, and more preferably 5% by mass or less of the total amount of the entire scaly pigment (b1) and the other pigment in that the scaly pigment is easily arranged in parallel with the coating film.

The luster coating material (b) may include the coating film-forming resin (b7) as described above. The content of the coating film-forming resin (b7) in the luster coating material (b) is preferably 50% by mass or less, and more preferably 40% by mass or less of the solid mass of the luster coating material (b).

### (c) Clear coating material

The clear coating material (c) is a two-pack type including a third hydroxy group-containing resin (c1) and a second curing agent (c2). When a two-pack clear coating material is used, higher coating film performance is likely to be obtained. The second curing agent (c2) reacts with the third hydroxy group-containing resin (c1) to form a clear coating film (C), and, at the same time, moves into the luster coating material (b) and reacts with the first hydroxy group-containing resin (a11) to form a luster coating film (B). The first hydroxy group-containing resin (a11) is supplied from the colored coating material (a).

The viscosity of the clear coating material (c) is not particularly limited. The clear coating material (c) has a No. 4 Ford cup viscosity at 20°C of 20 seconds or more and 50 seconds or less.

The solid content of the clear coating material (c) is not particularly limited. The solid content of the clear coating material (c) is, for example, 40% by mass or more and 65% by mass or less. The solid component of the clear coating material (c) refers to all components of the clear coating material (c) excluding the solvent.

### (c1) Third hydroxy group-containing resin

The third hydroxy group-containing resin (c1) has one or more hydroxy groups, and examples thereof include the same resins as those recited as examples as the first hydroxy group-containing resin (a11) and/or the second hydroxy group-containing resin (a12). The number average molecular weight thereof is not limited. Examples thereof specifically include a hydroxy group-containing acrylic resin, a hydroxy group-containing polyester resin, a hydroxy group-containing polyether resin, and a hydroxy group-containing polyurethane resin. These are used singly or two or more of them are used in combination. Among them, a hydroxy group-containing acrylic resin is preferable.

### (c2) Second curing agent

The second curing agent (c2) is not particularly limited, and may be appropriately selected according to the third hydroxy group-containing resin (c1). Examples of the second curing agent (c2) include the same curing agents as those recited as examples as the first curing agent (a2). Among them, a polyisocyanate compound is preferable from the viewpoint of various performance and cost of a resulting coating film.

The equivalent ratio (= NCO/OH) of the isocyanate group of the polyisocyanate compound as the second curing agent (c2) to the hydroxy group of the third hydroxy group-containing resin (c1) is not particularly limited. From the viewpoint of curability, scratch resistance, etc. of the coating film, the equivalent ratio (= NCO/OH) is preferably 0.5 or more and 2.0 or less, and more preferably 0.8 or more and 1.5 or less.

### (c3) Second solvent

The clear coating material (c) includes a second solvent (c3), as necessary.

The second solvent (c3) may be an organic solvent. Examples of the organic solvent to be used as the second solvent (c3) include the same organic solvents as those recited as examples as the first solvent (a5).

The amount of the second solvent (c3) is not particularly limited, and is appropriately set according to the solid content, viscosity, etc. of the clear coating material (c). The second solvent (c3) is added, for example, such that the solid content of the clear coating material (c) is 40% by mass or more and 65% by mass or less.

### (Others)

The clear coating material (c) may include a pigment as long as the transparency is not impaired. The pigment is not particularly limited, and conventionally publicly-known pigments may be used singly or two or more of them may be used in combination. The content of the pigment added is not particularly limited. The clear coating material (c) may include various additives, as necessary. Examples of the additive include an ultraviolet absorber, an antioxidant, an antifoaming agent, a surface conditioning agent, and a pinhole inhibitor.

### [Coated plate]

A coated plate includes an article to be coated and a multilayer coating film. The multilayer coating film includes a colored coating film (A), a luster coating film (B) formed on the colored coating film (A), and a clear coating film (C) formed on the luster coating film (B). The colored coating film (A) is formed of the colored coating material (a) described above. The luster coating film (B) is formed of the luster coating material (b) described above. The clear coating film (C) is formed of the two-pack clear coating material (c) described above. The multilayer coating film formed by applying the colored coating material (a), the luster coating material (b), and the clear coating material (c) in this order has a superior metallic design and high coating film performance.

### (Article to be coated)

The article to be coated is not particularly limited. The article to be coated may be, for example, at least a part of the body of a vehicle such as a passenger car, a truck, or a bus, or may be an exterior of these. The exterior is a member that can be visually recognized from the outside in the portion to be coated. Examples of the material of the article to be coated include a metal material including iron, copper, aluminum, tin, zinc, or an alloy thereof. The shape of the article to be coated is also not particularly limited. The article to be coated may have a plate shape or a three-dimensional shape.

The article to be coated may be subjected to degreasing treatment and/or surface treatment. Examples of the surface treatment include phosphate salt treatment, chromate treatment, zirconium chemical conversion treatment, and composite oxide treatment. The metal material preferably has undercoating with an electrodeposition coating material provided after the surface treatment. The electrodeposition coating material may be of a cationic type or of an anionic type.

### (Multilayer coating film)

The multilayer coating film includes a colored coating film (A) formed on an article to be coated, a luster coating film (B) formed on the colored coating film (A), and a clear coating film (C) formed on the luster coating film (B). In the multilayer coating film, the colored coating film (A), the luster coating film (B), and the clear coating film (C) are cured.

### (A) Colored coating film

The colored coating film (A) is formed of the colored coating material (a). The colored coating film (A) hides the texture and color of an article to be coated, and gives a desired color tone to an automobile body.

The thickness of the colored coating film (A) is not particularly limited. From the viewpoint of hiding property, the thickness of the colored coating film (A) may be 15 µm or more, 18 µm or more, or 20 µm or more. The thickness of the colored coating film (A) may be 50 µm or less, 45 µm or less, or 40 µm or less. In one embodiment, the thickness of the colored coating film (A) is 15 µm or more and 50 µm or less. When the thickness of the colored coating film (A) is within this range, the texture and color of the article to be coated are easily hidden without being seen through the colored coating film (A). The thickness of the colored coating film (A) is measured with, for example, an electromagnetic film thickness meter. The thickness of the colored coating film (A) is an average value of the thicknesses of the colored coating films in five different samples. The thicknesses of the other coating films can be measured and calculated in the same way.

### (B) Luster coating film

The luster coating film (B) is formed of the luster coating material (b). The luster coating film (B) gives a metallic texture to an automobile body.

The mass per unit area of the luster coating film (B) (the adhesion amount of the luster coating material (b) after drying) is preferably 6 × 10⁻⁶ g/mm² or less. When the adhesion amount of the luster coating film (B) is small like that, the scaly pigment is more likely to be arranged at a high density along the article to be coated. The mass per unit area of the luster coating film (B) is more preferably 1 × 10⁻⁶ g/mm² or less. The mass per unit area of the luster coating film (B) may be 1 × 10⁻⁷ g/mm² or more. In one embodiment, the mass per unit area of the luster coating film (B) is 1 × 10⁻⁷ g/mm² or more and 6 × 10⁻⁶ g/mm² or less.

### (C) Clear coating film

The clear coating film (C) is formed of the two-pack clear coating material (c). The clear coating film (C) protects the colored coating film (A) and the luster coating film (B).

The thickness of the clear coating film (C) is not particularly limited. From the viewpoint of scratch resistance, the thickness of the clear coating film (C) is preferably 10 µm or more, and more preferably 15 µm or more. The thickness of the clear coating film (C) may be 50 µm or less, or 40 µm or less in that whiteness and a metallic texture are hardly impaired. In one embodiment, the thickness of the clear coating film (C) is 10 µm or more and 50 µm or less.

### [Method for manufacturing coated plate]

The coated plate is manufactured by a method including the steps of applying a colored coating material (a) to form an uncured colored coating film (A), applying a luster coating material (b) to the uncured colored coating film (A) to form an uncured luster coating film (B), applying a clear coating material (c) to the uncured luster coating film (B) to form an uncured clear coating film (C), and curing the uncured colored coating film (A), the uncured luster coating film (B), and the uncured clear coating film (C) to obtain a multilayer coating film. Thanks to laminating the coating films in an uncured state, the second hydroxy group-containing resin (a12) and the second curing agent (c2) are supplied to the luster coating material (b) from the colored coating material (a) and from the clear coating material (c), respectively, so that a coated plate having both a metallic design and coating film performance is obtained.

In the present description, curing is a concept including solidification. That is, curing referred to in the present description means that a coating film loses fluidity regardless of whether or not it is accompanied by a chemical reaction. Specifically, curing referred to in the present description has the same meaning as "curing and drying" defined in JIS K 5500 (Glossary of terms for coating materials). That is, curing means a) when the center of a test piece is strongly sandwiched between the thumb and the forefinger, no dent due to the fingerprint is formed on the coating surface and no movement of the coating film is noticed, and when the coating surface is rapidly rubbed repeatedly with the fingertip, the coating surface is in a dry hard state in which no scratch marks are formed. The uncured state referred to in the present description is a state other than the above-described cured state, and includes a semi-cured state.

### (1) Step of forming uncured colored coating film (S11)

The colored coating material (a) is applied to an article to be coated to form an uncured colored coating film (A).

The applying method is not particularly limited. Examples of the applying method include air spray coating, airless spray coating, rotary atomization coating, and curtain coating. These methods may be combined with electrostatic coating. Among them, rotary atomization type electrostatic coating is preferable from the viewpoint of coating efficiency. For the rotary atomization type electrostatic coating, for example, a rotary atomization type electrostatic coating machine commonly called "MICRO BELL (µµ bell)", "MICRO BELL (µ bell)", "METALLIC BELL", or the like is used.

The application amount of the colored coating material (a) is not particularly limited. The colored coating material (a) is applied, for example, such that the thickness of the colored coating film (A) after curing is 15 µm or more and 50 µm or less.

After the colored coating material (a) is applied, preliminary drying (also referred to as preheating) may be carried out. Owing to this, the solvent contained in the colored coating film (A) is inhibited from bumping in the curing step, so that the occurrence of bubbles is likely to be inhibited.

Conditions for the preliminary drying are not particularly limited. Examples of the preliminary drying include a method in which the item to be dried is left standing for 15 minutes or more and 30 minutes or less under a temperature condition of 20°C or more and 25°C or less, and a method in which the item to be dried is heated for 30 seconds or more and 10 minutes or less under a temperature condition of 50°C or more and 100°C or less.

### (2) Step of forming uncured luster coating film (S12)

The luster coating material (b) is applied to the uncured colored coating film (A) to form an uncured luster coating film (B).

The applying method is not particularly limited. Examples of the applying method include the same methods as the method of applying the colored coating material (a). Among them, rotary atomization type electrostatic coating is preferable from the viewpoint of coating efficiency.

The luster coating material (b) is preferably applied such that the mass per unit area of the luster coating film (B) (the adhesion amount of the luster coating material (b) after drying) is 1 × 10⁻⁷ g/mm² or more and 6 × 10⁻⁶ g/mm² or less.

After the luster coating material (b) is applied, preliminary drying may be performed. As a result, the fluidity of the luster coating film (B) rapidly decreases, and the flow of the scaly pigment (b1) is also likely to be inhibited. The conditions for the preliminary drying are not particularly limited, and may be the same as those for the preliminary drying of the colored coating film (A).

### (3) Step of forming uncured clear coating film (S13)

The clear coating material (c) is applied to the uncured luster coating film (B) to form an uncured clear coating film (C).

The applying method is not particularly limited. Examples of the applying method include the same methods as the method of applying the colored coating material (a). Among them, rotary atomization type electrostatic coating is preferable from the viewpoint of coating efficiency.

The amount of the clear coating material (c) applied is not particularly limited. The clear coating material (c) is applied, for example, such that the thickness of the clear coating film (C) after curing is 10 µm or more and 50 µm or less.

### (4) Curing step (S14)

The uncured colored coating film (A), the uncured luster coating film (B), and the uncured clear coating film (C) are cured at one time. Each coating film can be cured by heating.

The heating conditions are appropriately set according to the composition and the like of the respective coating films. The heating temperature is, for example, 70°C or more and 160°C or less, and may be 80°C or more and 150°C or less. The heating time is, for example, 10 minutes or more and 40 minutes or less, and may be 20 minutes or more and 30 minutes or less. Examples of a heating device include drying furnaces such as a hot air oven, an electric oven, and an infrared induction heating oven.

### EXAMPLES

In the following, the present invention will be described more specifically with reference to Examples and Comparative Examples. Note that the present invention is not limited to these Examples only. "Part" and "%" are both on mass basis.

### [Production Example A-1] Production of first hydroxy group-containing resin (a11-1)

To a reactor, 25.6 parts of isophthalic acid, 22.8 parts of phthalic anhydride, 5.6 parts of adipic acid, 19.3 parts of trimethylolpropane, 26.7 parts of neopentyl glycol, 17.5 parts of ε-caprolactone, and 0.1 parts of dibutyltin oxide were added and then heated to 170°C with mixing and stirring. Thereafter, while the reaction mixture was heated to 220°C over 3 hours, the water produced by the condensation reaction was removed until the acid value reached 8. Next, 7.9 parts of trimellitic anhydride was added to the reactor and reacted at 150°C for 1 hour, affording a polyester resin having an acid value of 40. Further, the polyester resin was cooled to 100°C, and then 11.2 parts of butyl cellosolve was added, and the mixture was stirred until uniform. Subsequently, the polyester resin was cooled to 60°C, and then 98.8 parts of ion-exchanged water and 5.9 parts of dimethylethanolamine were added. Thereby, a first hydroxy group-containing resin (a11-1: hydroxy group-containing polyester resin) having a solid content of 50% by mass was obtained. The first hydroxy group-containing resin (a11-1) had a solid acid value of 40 mg KOH/g, a solid hydroxyl value of 110 mg KOH/g, and a number average molecular weight of 2000.

### [Production Example A-2] Production of first hydroxy group-containing resin (a11-2)

A first hydroxy group-containing resin (a11-2: hydroxy group-containing polyester resin) was obtained in the same manner as in Production Example A-1 except that the ratio of monomers was changed. The first hydroxy group-containing resin (a11-2) had a solid acid value of 30 mg KOH/g, a solid hydroxyl value of 70 mg KOH/g, and a number average molecular weight of 3000.

### [Production Example A-3] Production of first hydroxy group-containing resin (a11-3)

A first hydroxy group-containing resin (a11-3: hydroxy group-containing polyester resin) was obtained in the same manner as in Production Example A-1 except that the ratio of monomers was changed. The first hydroxy group-containing resin (a11-3) had a solid acid value of 15mg KOH/g, a solid hydroxyl value of 50 mg KOH/g, and a number average molecular weight of 5000.

### [Production Example B-1] Production of second hydroxy group-containing resin (a12-1)

A reactor was charged with 445 parts of water and 5 parts of Newcol 293 (manufactured by Nippon Nyukazai Co., Ltd. and these were heated to 75°C with stirring. A mixture of a monomer mixture containing 145 parts of methyl methacrylate, 50 parts of styrene, 220 parts of ethyl acrylate, 70 parts of 2-hydroxyethyl methacrylate, and 15 parts of methacrylic acid, 240 parts of water, and 30 parts of Newcol 293 (manufactured by Nippon Nyukazai Co., Ltd.) was emulsified with a homogenizer, and thus a monomer pre-emulsified solution was obtained. The monomer pre-emulsified solution was added dropwise over 3 hours with stirring the inside of the reaction vessel. In parallel with the dropping of the monomer pre-emulsified solution, an aqueous solution prepared by dissolving 1 part of APS (ammonium persulfate) as a polymerization initiator in 50 parts of water was evenly dropped to the reaction vessel until the dropping of the monomer pre-emulsion was completed. After the completion of dropping the monomer pre-emulsified solution, the reaction was continued at 80°C for 1 hour. After cooling the reaction mixture, an aqueous solution prepared by dissolving 2 parts of dimethylaminoethanol in 20 parts of water was added to the reaction vessel. Next, the mixture was filtered through a 200 mesh filter, affording a second hydroxy group-containing resin (a12-1, acrylic resin emulsion) having a solid content of 40.6%. The second hydroxy group-containing resin (a12-1) had a number average molecular weight of more than 100000, a particle size (D50) of 200 nm in an aqueous solution having a pH of 8, a solid acid value of 15 mg KOH/g, and a solid hydroxyl value of 50 mg KOH/g.

### [Production Example B-2] Production of second hydroxy group-containing resin (a12-2)

A second hydroxy group-containing resin (a12-2, acrylic resin emulsion) was obtained in the same manner as in Production Example B-1 except that the amount of the emulsifier was changed. The second hydroxy group-containing resin (a12-2) had a number average molecular weight of more than 100000, a particle size (D50) of 100 nm in an aqueous solution having a pH of 8, a solid acid value of 15 mg KOH/g, and a solid hydroxyl value of 50 mg KOH/g.

### [Production Example C] Production of phosphoric acid group-containing polymer (a42, b42)

A reaction vessel was charged with 40 parts by mass of ethoxypropanol, into which a monomer solution (121.7 parts by mass) composed of 4 parts by mass of styrene, 35.96 parts by mass of n-butyl acrylate, 18.45 parts by mass of ethylhexyl methacrylate, 13.92 parts by mass of 2-hydroxyethyl methacrylate, 7.67 parts by mass of methacrylic acid, 20 parts by mass of acid phosphoxyhexa(oxypropylene) monomethacrylate ("PHOSMER PP" manufactured by Uni-Chemical Co., Ltd.), 20 parts of ethoxypropanol, and 1.7 parts by mass of azobisisobutyronitrile was dropped at 120°C over 3 hours, followed by continuous stirring for 1 hour. Thus, a liquid containing a phosphoric acid group-containing polymer (phosphoric acid group-containing acrylic resin) was obtained (nonvolatiles content: 63% by mass). The phosphoric acid group-containing polymer obtained had a number average molecular weight of 6000, a solid phosphoric acid group value of 100 mg KOH/g, and a hydroxyl value of 60 mg KOH/g.

### [Production Example D-1] Preparation of other coating film-forming resin (a13)

The water-soluble acrylic resin produced as described below/polyurethane emulsion/polyether polyol were mixed at a ratio of 1/1/1 in terms of solid mass to prepare another coating film-forming resin (a13).

As the polyurethane emulsion, "NEOREZ R-9603" (polycarbonate-based urethane emulsion resin, nonvolatiles content: 33% by mass) manufactured by Avecia was used. As the polyether polyol, "PRIMEPOL PX-1000" (bifunctional polyether polyol, number average molecular weight 1000) manufactured by Sanyo Chemical Industries, Ltd. was used.

### (Production of water-soluble acrylic resin)

23.89 parts by mass of tripropylene glycol methyl ether and 16.11 parts by mass of propylene glycol methyl ether were added to a reaction vessel, and the mixture was heated to 105°C while being mixed and stirred in a nitrogen stream. Subsequently, a monomer mixture of 13.1 parts by mass of methyl methacrylate, 68.4 parts by mass of ethyl acrylate, 11.6 parts by mass of 2-hydroxyethyl methacrylate, and 6.9 parts by mass of methacrylic acid was prepared, and 100 parts by mass of the monomer mixture and an initiator solution composed of 10.0 parts by mass of tripropylene glycol methyl ether and 1 part by mass of tert-butyl peroxy-2-ethylhexanoate were dropped in parallel into the reaction vessel over 3 hours. After the completion of the dropping, aging was carried out at that temperature for 0.5 hours.

Furthermore, an initiator solution composed of 5.0 parts by mass of tripropylene glycol methyl ether and 0.3 parts by mass of tert-butyl peroxy-2-ethylhexanoate was dropped into the reaction vessel over 0.5 hours. After the completion of the dropping, aging was carried out at that temperature for 2 hours.

After removing 16.1 parts by mass of the solvent at 110°C under reduced pressure (70 torr) with a desolvating apparatus, 204 parts by mass of deionized water and 7.1 parts by mass of dimethylaminoethanol were added to obtain a water-soluble acrylic resin solution. The water-soluble acrylic resin solution obtained had a nonvolatiles content of 30% by mass, a number average molecular weight of 10000, a solid acid value of 40 mg KOH/g, and a hydroxyl value of 50 mg KOH/g.

### [Production Example D-2] Preparation of coating film-forming resin (b7)

The hydroxy group-containing acrylic resin emulsion produced as described below/melamine resin (CYMEL 327) were mixed at a ratio of 7/3 in terms of solid mass to prepare a coating film-forming resin (b7).

### (Production of hydroxy group-containing acrylic resin emulsion)

A reaction vessel was charged with 330 g of deionized water, and the temperature was raised to 80°C with mixing and stirring in a nitrogen stream. Then, a 3% portion of a monomer emulsion composed of 11.25 parts of acrylic acid, 139 parts of n-butyl acrylate, 75 parts of methyl methacrylate, 187 parts of n-butyl methacrylate, 75 parts of 2-ethylhexyl methacrylate, 150 parts of 2-hydroxyethyl methacrylate, 112 parts of styrene, 11.2 parts of THIOCALCOL 20 (n-dodecylmercaptan, manufactured by Kao Corporation, active component content: 100%), 74.3 parts of LATEMUR PD-104 (emulsifier, manufactured by Kao Corporation, active component content: 20%), and 300 parts of deionized water, and a 30% portion of an initiator solution composed of 2.63 parts of ammonium persulfate and 90 parts of deionized water were added dropwise to the reaction vessel in parallel over 15 minutes. After the completion of the dropping, aging was carried out at that temperature for 15 minutes. Furthermore, the remainders of the monomer emulsion and the initiator solution were added dropwise to the reaction vessel in parallel over 180 minutes. After the completion of the dropping, aging was carried out at the same temperature for 1 hour. Then, the mixture was cooled to 40°C and was filtered through a 200 mesh filter, affording a hydroxy group-containing acrylic resin emulsion having an average particle size of 200 nm, a nonvolatiles content of 49%, a solid acid value of 15 mg KOH/g, and a hydroxyl value of 85 mg KOH/g.

### [Production Example E] Production of white pigment dispersion paste

After preliminarily mixing 4.5 parts of DISPERBYK 190 (nonionic and anionic dispersant, manufactured by BYK-Chemie) as a dispersant, 0.5 parts of BYK-011 (manufactured by BYK-Chemie) as an antifoaming agent, 22.9 parts of ion-exchanged water, and 72.1 parts of titanium dioxide (coloring pigment a3), a glass bead medium was added in a paint conditioner, and mixed at room temperature until the secondary particle size of the titanium dioxide reached 5 µm or less, and thus a pigment dispersion paste was obtained.

### [Example 1]

### (I) Preparation of article to be coated

A zinc phosphate-treated steel sheet with a cured electrodeposition coating film was prepared as an article to be coated. The cured electrodeposition coating film was formed by electrodeposition coating the zinc phosphate-treated steel sheet with "POWERNICS", which is a cationic electrodeposition coating composition manufactured by Nippon Paint Co., Ltd., such that a dry film thickness was 20 µm, and then heating at 160°C for 30 minutes.

### (II) Preparation of coating composition set

### (II-1) Preparation of colored coating material

A first hydroxy group-containing resin, a second hydroxy group-containing resin, a white pigment dispersion paste, and the like were mixed according to the components and blending proportions given in Table 1 to prepare a colored coating material (a). The viscosity of the colored coating material (a) measured with a B-type viscometer (manufactured by Toki Sangyo Co., Ltd., model TVB10, single cylindrical rotary viscometer) under the conditions of a coating material temperature of 20°C and 60 rpm was 4000 mPa·s, and the solid content was 50% by mass. CYMEL 327 (melamine resin manufactured by Allnex) was used as a curing agent. The blending proportions given in Table 1 are based on a solid mass.

### (II-2) Preparation of luster coating material

A luster coating material (b) was prepared according to the components and blending proportions given in Table 1. The luster coating material (b) had a viscosity of 400 mPa·s as measured with a B-type viscometer (manufactured by Toki Sangyo Co., Ltd., model TVB10, single cylindrical rotary viscometer), and a solid content of about 4.1% by mass.

### (II-3) Preparation of clear coating material

PU EXCEL 0-2100 (two-pack clear coating material manufactured by Nippon Paint Co., Ltd.) was prepared as a clear coating material (c). The clear coating material (c) contained a hydroxy group-containing acrylic resin as a main agent and a polyisocyanate compound as a curing agent. The viscosity of the clear coating material (c) measured at 20°C using a No. 4 Ford cup was 25 seconds.

The ingredients used in the examples and the comparative examples are as follows.

### (Scaly pigment)

Aluminum particle: Trade name: SB-10, manufactured by Asahi Kasei Corp., thickness: 0.06 µm, average particle size: 10 µm

### (Cellulose nanofiber)

TEMPO-oxidized type CNF: average fiber width: 2 to 4 nm, carboxy group amount: 1.4 mmol/g

### (Cellulose ester derivative)

Carboxymethyl cellulose acetate butyrate (CAB): Trade name: SOLUS 3050, acid value: 50 mg KOH/g, manufactured by Eastman Chemical Company

### (Surface conditioning agent)

Polyether-modified siloxane-based surface conditioning agent: Trade name: TEGOFLOW 425, manufactured by Evonik Industries AG

### (Surfactant)

Acetylene diol-based surfactant: Trade name: SURFYNOL 104A, manufactured by Evonik Industries AG

### (III) Step of forming uncured colored coating film

The colored coating material (X-1) was applied to an article to be coated using a metallic bell.

### (IV) Step of forming uncured luster coating film

The luster coating material (b) was applied to the uncured colored coating film using a metallic bell.

### (V) Step of forming uncured clear coating film

The clear coating material (c) was applied to the uncured luster coating film using a micro micro bell.

### (VI) Curing step

After the step (V) of forming a clear coating film, the resultant was heated at 140°C for 20 minutes, affording an article to be coated having a multilayer coating film Al. In the multilayer coating film A1, the thickness of the colored coating film was 30 µm, and the black-and-white hiding film thickness of the colored coating film was 60 µm. The mass per unit area of the luster coating film was 0.7 × 10⁻⁶ g/mm². The thickness of the clear coating film was 30 µm.

### [Examples 2 to 8, Comparative Examples 1 to 3]

Coated plates with a multilayer coating film were prepared and evaluated in the same manner as in Example 1 except that each coating material was prepared according to the components and blending proportions given in Table 1. The results are shown in Table 1.

### [Evaluation]

### (1) Designability

Using a multi-angle spectrophotometer MA-68 (manufactured by X-Rite, Inc.), the spectral reflectance of light irradiated from an angle of 45 degrees with respect to a multilayer coating film was measured at a light receiving angle of 15 degrees with respect to regular reflected light. Next, the lightness L* (L value) in the L*a*b* color system (CIE1976 L*a*b* color space) calculated from the spectral reflectance was calculated. The larger the L value, the better in metallic tone the sample. The L value calculated was evaluated according to the following criteria. The L value of the article to be coated after the formation of the cured colored coating film and before the application of the luster coating material was 90.
Good: 100 or more
Fair: 95 or more and less than 100
Poor: less than 95

### (2) Water resistance (adhesion after immersion test)

A constant temperature water bath with a circulation function was set at 40°C and filled with deionized water. A coated plate was immersed therein. After immersion for 240 hours, the coated plate was pulled up and placed at room temperature (23 °C), and water droplets were lightly wiped away. Within 10 minutes after the pulling up, cuts (vertical 11 lines, horizontal 11 lines, 2 mm intervals) reaching the article to be coated were made with an NT CUTTER (manufactured by NT Incorporated), and thus 100 squares were formed. An adhesive tape (cellophane adhesive tape manufactured by Nichiban Co., Ltd., 24 mm wide) was attached to cover all the squares, and was strongly adhered from above with a nail or the like. Next, the tape was peeled off while being pulled such that the angle formed with the coating film was about 45°. The coating film after the peeling of the tape was visually evaluated. Evaluation criteria are as follows.
Good: No chipping of the coating film was observed on both sides of the cuts and at intersections of the cuts, and peeling of the coating film was observed in none of the squares.
Fair: Slight chipping of the coating film was observed on both sides of the cuts and at intersections of the cuts, but peeling was observed in none of the squares.
Poor: Peeling was observed in one or more squares.

### (3) Settling property

The luster coating material was placed in a glass container, sealed, and left at rest at 20°C for 10 days. Thereafter, the state of the coating material was visually evaluated. Evaluation criteria are as follows.
Good: Settling of the scaly pigment is not observed.
Fair: Settling is observed within seven days after leaving the coating material at rest.
Poor: Settling is observed within one day after leaving the coating material at rest.

**[Table 1]**

| | | | | | Example 1 | Example 2 | Example 3 | Example 4 | Example 5 | Example 6 | Example 7 | Example 8 | Comparative Example 1 | Comparative Example 2 | Comparative Example 3 |
|---|---|---|---|---|---|---|---|---|---|---|---|---|---|---|---|
| Colored coating material (a) | Coloring pigment (a3) | | | | 100 | 100 | 100 | 100 | 100 | 100 | 100 | 100 | 100 | 100 | 100 |
| | Hydroxy group-containing resin (a1) | No. | Molecular weight | Particle size | | | | | | | | | | | |
| | First hydroxy group-containing resin (a 11) | a11-1 | 2000 | - | 30 | | 50 | 30 | 10 | 30 | 30 | 30 | 30 | 30 | 0 |
| | | a11-2 | 3000 | - | | 30 | | | | | | | | | |
| | | a11-3 | 5000 | - | | | | | | | | | | | 30 |
| | Second hydroxy group-containing resin (a12) | a12-1 | More than 100,000 | 200 nm | 10 | 10 | 10 | 10 | 10 | 10 | 10 | | 10 | 10 | 10 |
| | | a12-2 | More than 100,000 | 100 nm | | | | | | | | 10 | | | |
| | Curing agent (a2) | Melamine resin | | | 30 | 30 | 30 | 30 | 30 | 30 | 30 | 30 | 30 | 30 | 30 |
| | Phosphoric acid group-containing compound (a4) | Phosphoric acid group-containing polymer | | | 2 | 2 | 2 | 5 | 2 | 2 | 2 | 2 | 2 | 2 | 2 |
| | Other coating film-forming resin (a13) | | | | 28 | 28 | 8 | 25 | 48 | 28 | 28 | 28 | 28 | 28 | 28 |
| | Total solid content | | | | 200 | 200 | 200 | 200 | 200 | 200 | 200 | 200 | 200 | 200 | 200 |
| | Solvent (a5, distilled water and organic solvent) | | | | 200 | 200 | 200 | 200 | 200 | 200 | 200 | 200 | 200 | 200 | 200 |
| Luster coating material (b) | Cellulose nanofiber (b3) | | | | 10 | 10 | 10 | 10 | 10 | 7 | 4 | 10 | 0 | 20 | 30 |
| | Cellulose ester derivative (b2) | | | | 50 | 50 | 50 | 50 | 50 | 35 | 20 | 50 | 60 | 0 | 30 |
| | Phosphoric acid group-containing compound (b4) | Phosphoric acid group-containing polymer | | | 10 | 10 | 10 | 10 | 10 | 8 | 6 | 10 | 10 | 25 | 10 |
| | Other additives (surface conditioning agent, surfactant) | | | | 20 | 20 | 20 | 20 | 20 | 15 | 10 | 20 | 20 | 45 | 20 |
| | Coating film-forming resin (b7) | | | | 0 | 0 | 0 | 0 | 0 | 25 | 50 | 0 | 0 | 0 | 0 |
| | Scaly pigment (b1) | Aluminum | | | 10 | 10 | 10 | 10 | 10 | 10 | 10 | 10 | 10 | 10 | 10 |
| | Total solid content | | | | 100 | 100 | 100 | 100 | 100 | 100 | 100 | 100 | 100 | 100 | 100 |
| | Coating film mass (g) per 1 mm² | | | | 0.7 × 10⁻⁶ | 0.7 × 10⁻⁶ | 0.7 × 10⁻⁶ | 0.7 × 10⁻⁶ | 0.7 × 10⁻⁶ | 0.7 × 10⁻⁶ | 0.7 × 10⁻⁶ | 0.7 × 10⁻⁶ | 0.7 × 10⁻⁶ | 0.7 × 10⁻⁶ | 0.7 × 10⁻⁶ |
| | Organic solvent | | | | 500 | 500 | 500 | 500 | 500 | 100 | 200 | 500 | 500 | 500 | 500 |
| | Aqueous solvent (b5, distilled water) | | | | 2000 | 2000 | 2000 | 2000 | 2000 | 400 | 800 | 2000 | 2000 | 2000 | 2000 |
| Evaluation | Designability | | | | Good | Good | Good | Good | Good | Good | Fair | Fair | Fair | Poor | Good |
| | Water resistance | | | | Good | Good | Good | Good | Good | Good | Good | Good | Good | Good | Poor |
| | Settling property | | | | Good | Good | Good | Good | Good | Good | Good | Good | Poor | Good | Good |

### INDUSTRIAL APPLICABILITY

The coating composition set of the present invention can achieve both a metallic design and coating film performance, and thus is particularly suitable for coating of an automobile exterior.

This application claims priority based on Japanese Patent Application No. 2021-128103, which was filed in Japan on August 4, 2021, the disclosure of which application is incorporated herein by reference in its entirety.

## Claims

1. A coating composition set comprising:
a colored coating composition (a) to form a colored coating film (A);
a luster coating composition (b) to be applied to the colored coating film (A) and form a luster coating film (B); and
a clear coating composition (c) to be applied to the luster coating film (B) and form a clear coating film (C),
wherein
the colored coating composition (a) includes a hydroxy group-containing resin (a1), a first curing agent (a2), and a coloring pigment (a3),
the hydroxy group-containing resin (a1) includes a first hydroxy group-containing resin (a11) having a number average molecular weight of 3000 or less and a second hydroxy group-containing resin (a12) having a number average molecular weight of 100000 or more,
the luster coating composition (b) includes a scaly pigment (b1), a cellulose ester derivative (b2), a cellulose nanofiber (b3), a phosphoric acid group-containing compound (b4), and an aqueous solvent (b5),
the luster coating composition (b) has a solid content of 0.1% by mass or more and 12% by mass or less, and
the clear coating composition (c) is a two-pack type including a third hydroxy group-containing resin (c1) and a second curing agent (c2).

2. The coating composition set according to claim 1, wherein a particle size of the second hydroxy group-containing resin (a12) in an aqueous solution having a pH of 8 is 150 nm or more.

3. The coating composition set according to claim 1 or 2, wherein a content of the first hydroxy group-containing resin (a11) is 8% by mass or more and 60% by mass or less based on a total resin solid content of the colored coating composition (a).

4. The coating composition set according to any one of claims 1 to 3, wherein the phosphoric acid group-containing compound (b4) includes at least one of an alkyl phosphate (b41) having an alkyl group having 4 to 30 carbon atoms and a phosphoric acid group-containing polymer (b42) having a phosphoric acid group value of 5 mg KOH/g or more and 300 mg KOH/g or less.

5. The coating composition set according to any one of claims 1 to 4, wherein the cellulose ester derivative (b2) has an acid value of 20 mg KOH/g or more.

6. The coating composition set according to any one of claims 1 to 5, wherein a content of the scaly pigment (b1) is 3% by mass or more and 50% by mass or less based on a total solid content of the luster coating composition (b).

7. The coating composition set according to any one of claims 1 to 6, wherein a content of the phosphoric acid group-containing compound (b4) is 0.1% by mass or more and 15% by mass or less based on a total solid content of the luster coating composition (b).

8. The coating composition set according to any one of claims 1 to 7, wherein the luster coating composition (b) further includes a surface conditioning agent (b6).

9. The coating composition set according to any one of claims 1 to 8, wherein the colored coating composition (a) further includes a phosphoric acid group-containing compound (a4).

10. The coating composition set according to any one of claims 1 to 9, wherein the luster coating composition (b) is to be applied to the colored coating film (A) that is uncured.

11. The coating composition set according to any one of claims 1 to 10, wherein the clear coating composition (c) is to be applied to the luster coating film (B) that is uncured.
